# EUROPEAN PATENT APPLICATION

(11) **EP 2 028 032 A2**
(43) Date of publication of application: **25.02.2009**
(21) Application number: 08380197.7
(22) Date of filing: 04.07.2008
(51) Int. Cl.: B60K 37/00

(54) **Modular cockpit carrier**

(30) Priority: 06.07.2007 ES 200701912
(71) Applicant: FPK S.A., 48170 Zamudio (ES)
(72) Inventor: Martinez-Cue Pesini, 48100 Mungia Vizcaya (ES)
(74) Representative: Urteaga Simarro, José Antonio

(57) **Abstract**

Cockpit carrier for a vehicle, which comprises a structure (1) that may be connected to the A-pillars of the vehicle, and which comprises adaptor elements (2) formed as parts independent to the structure (1) and which may be connected to it by fixing means. Said adaptor elements (2) constitute the means for connecting at least one functional element of the vehicle to the structure (1). The cockpit carrier may therefore be modular, the structure (1) being able to be used in different models of vehicles, the adaptor elements (2) being specific to each vehicle model. Modularity allows reducing the manufacture, repair and maintenance cost the cockpit carrier.

## Description

### Technical field

The invention relates to a cockpit carrier for a motor vehicle.

### Prior art

A motor vehicle cockpit carrier is a safety feature that can be found in the front part of a vehicle passenger compartment. It acts as a structural element to which elements such as the dashboard, steering column, the steering column support, firewall, airbag, glove compartment, air and air-conditioning distribution ducts, the heating and air-conditioning (HVAC) distribution and regulation system, cables, the instrument panel, knee restraints, sound system, navigation system and/or other electrical or electronic device, bonnet release lever, and the pedals are connected. Said cockpit carrier is also known as the dashboard support or the instrument panel support.

Existing cockpit carriers are generally made up of a main part that may be manufactured according to various technologies and various materials (such as plastic). The main part may be reinforced by metal parts and other reinforcement elements in order to comply with the applicable structural impact resistance requirements. Said main part is also provided with zones and means for receiving and connecting the elements listed in the previous paragraph. These elements vary in different vehicle models produced by the same manufacturer (depending on if they are present or not, and depending on their size, shape, etc.). Because of this, manufacturers must manufacture and handle, over the course of time, various cockpit carrier models specific to each vehicle model or to each vehicle model restyling or update. Since the cockpit carrier is relatively large in size and relatively complex, having to handle various cockpit carrier models makes each model relatively expensive.

The invention aims to provide a cockpit carrier that can be manufactured more cheaply while operating in exactly the same way as conventional supports and offering identical performance.

### Brief description of the invention

It is an object of the invention to provide a cockpit carrier for a motor vehicle, with the specific feature that it comprises several main parts: a structure and adaptor elements. The structure is a part with mainly structural and support functions and that may be connected to the A-pillars of the vehicle (A-pillars are understood to be the pillars or structural elements available in all vehicles and on which the front door hinges are usually located). The adaptor elements are independent to the structure and may be connected to it by fixing means. Said adaptor elements allow connecting the structure to at least one functional element of the vehicle, preferably out of the following functional elements: steering column, steering column support, firewall, airbag, glove compartment, air and air-conditioning distribution ducts, a heating and air-conditioning (HVAC) distribution and regulation system, cables, a dashboard, instrument panel, knee restraints, a sound system, navigation system and/or other electrical or electronic device, bonnet release lever, or pedals.

It is another object of the invention to provide a modular cockpit carrier, i.e., a cockpit carrier provided with a structure that is a single part common to all vehicle models comprised in a group of vehicles, and provided with different adaptor elements that are specific to one or more vehicles in said group of vehicles. For example, a vehicle manufacturer manufacturing a group of "utility vehicles" that includes a model A and a model B, by means of the present invention may thus manufacture a single structure common to both models A and B, and adaptor elements specific to each model A and model B. In another example, a manufacturer may restyle or update the same vehicle model on numerous occasions; the cockpit carriers of all the restylings would thus have the same structure, with only the adaptor elements being updated if necessary.

The invention therefore provides numerous advantages, especially economic. The fact that the cockpit carrier is provided with a structure common to various vehicle models allows for a cost reduction of said structure. Given that the structure is the largest part in the cockpit carrier and generally the part that requires mechanical reinforcements and other elements guaranteeing the structural requirements of said support, the fact that its cost is reduced means the overall cost of the dashboard support is significantly reduced. Therefore, the overall cost that the vehicle manufacturer has to meet for a group of different vehicle models using the same structure is considerably reduced.

In addition, the fact that the cockpit carrier is made up of various main parts instead of a single part makes it easier to repair, dismantle and maintain. In the event of a fault, in many cases it will be only necessary to dismantle and replace a single adaptor element rather than the entire cockpit carrier, as is the case with conventional supports.

A further advantage of the cockpit carrier according to the invention is that the adaptor elements may be manufactured using materials and processes that are different to the material and processes used to manufacture the structure. This may be of interest whenever a certain adaptor element needs to be manufactured with a very specific technology or material in order to guarantee that a specific functional element of the vehicle can be correctly connected.

### Brief description of the drawings

Details of the invention can be seen in the accompanying non-limiting figures:
- Figure 1 shows an exploded perspective of a first embodiment of the invention.
- Figure 2 shows an exploded perspective of a second embodiment of the invention.
- Figure 3 shows an exploded perspective of a third embodiment of the invention.
- Figure 4 shows an exploded perspective of a fourth embodiment of the invention.
- Figure 5 shows a left-side view of the embodiment of Figure 4.
- Figure 6 shows an embodiment of a different adaptor element to those shown in the preceding figures.

### Detailed description of the invention

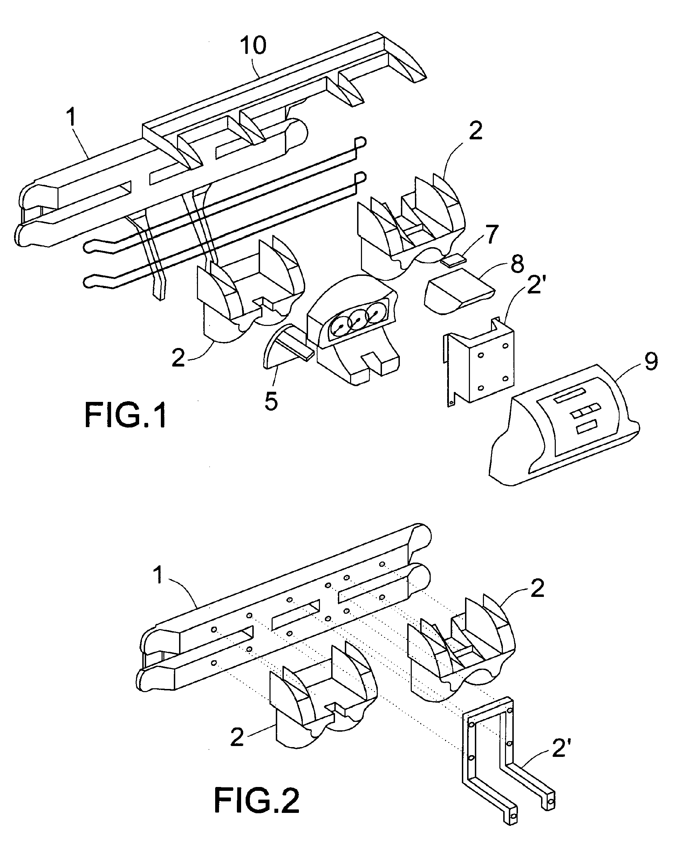

Figure 1 shows an exploded perspective of an embodiment of an inventive cockpit carrier. The cockpit carrier shown in the figure comprises a structure (1) and three adaptor elements (2) as main parts.

The structure (1) may be made of plastic or metal. If the structure is made of plastic, it may be manufactured by any processing technology for reinforced or non-reinforced plastic, for example, by injection or by compression. If it is made of metal, the structure (1) may be manufactured by magnesium moulding, aluminium moulding or aluminium casting. It may also be manufactured from steel, being formed, for example, by welded or assembled tubular steel elements, combined or not with welded steel sheets. It may also be manufactured from steel and formed by different pre-stamped steel sheet elements that are assembled or welded together.

Similarly, the adaptor elements (2) may be made of plastic or metal. If they are made of plastic, they may be manufactured by any processing technology for reinforced or non-reinforced plastic, for example, by injection or by compression. If they are made of metal, they are generally manufactured by a magnesium moulding process or by a steel or aluminium pre-stamping process.

In both cases, the plastic materials may be thermoplastic or thermosettable. Plastic materials can be reinforced or not with fibreglass, carbon fibre, etc., or with other types of reinforcements such as metal reinforcements. Said metal reinforcements may be overmoulded with the plastic, fitted on top of the structure by various mechanical fixing means, etc.

Specifically, the structure (1) shown in Figure 1 is manufactured by moulding fibre-glass-reinforced thermoplastic. Structure (1) also features additional reinforcements (4) in the form of filament fibreglass yarns, wounded with a shape similar to that of the part to be reinforced and subsequently connected to said part, in other words, connected to the structure (1).

The left-most adaptor element (2) is the pilot's adaptor element, while the right-most adaptor element (2) is the co-pilot's adaptor element. The pilot's adaptor element (2) allows connecting the steering column support (5). The structure (1) is adaptable to various vehicle models in which the position of the steering column varies depending on ergonomic parameters. Additionally, an instrument panel (6) featuring the tachometer, rpm counter, etc. is also connected to the pilot's adaptor element (2). In turn, the co-pilot's adaptor element (2) allows connecting an airbag (7) and a glove compartment (8). In addition, the central console (9) is connected to the central adaptor element (2). Said central console (9) is a functional and aesthetic element that, depending on the vehicle model, may comprise the gear lever, the heating and air-conditioning controls, the sound system, a drinks holder, a glasses storage compartment, etc..

In addition, in the present embodiment the ducts (10) of the heating and air-conditioning (HVAC) distribution and regulation system are directly connected to the structure (1) without the use of an intermediate adaptor element (2). In other words, the inventive cockpit carrier may of course allow that in certain cases some functional elements of the vehicle may are connected to it conventionally, i.e., directly, not using intermediate adaptor elements (2).

An inventive cockpit carrier such as that in Figure 1 is manufactured according to a procedure according to the invention. Said procedure comprises certain steps described hereafter. Firstly, a structure (1) capable of being connected to the A-pillars of the vehicle is provided. Depending on the vehicle model into which the cockpit carrier is to be fitted, specific adaptor elements (2), made as separate parts capable of being connected to the sructure (1) by fixing means, are then selected. As has been explained, said adaptor elements (2) allow connecting at least one functional element of the vehicle to the structure (1). Finally, the adaptor elements (2) are connected to the structure (1). Naturally, the procedure may feature other additional steps such as the connection of reinforcements to the structure (1), etc.

Figure 2 shows an exploded perspective of a second embodiment of the invention. Here, the structure (1) has an adaptor element (2') connected to it and which acts as a zone for connecting the heating and air-conditioning (HVAC) distribution and regulation system. Additionally, it also has driver and passenger adaptor elements (2) similar to those in Figure 1 connected to it.

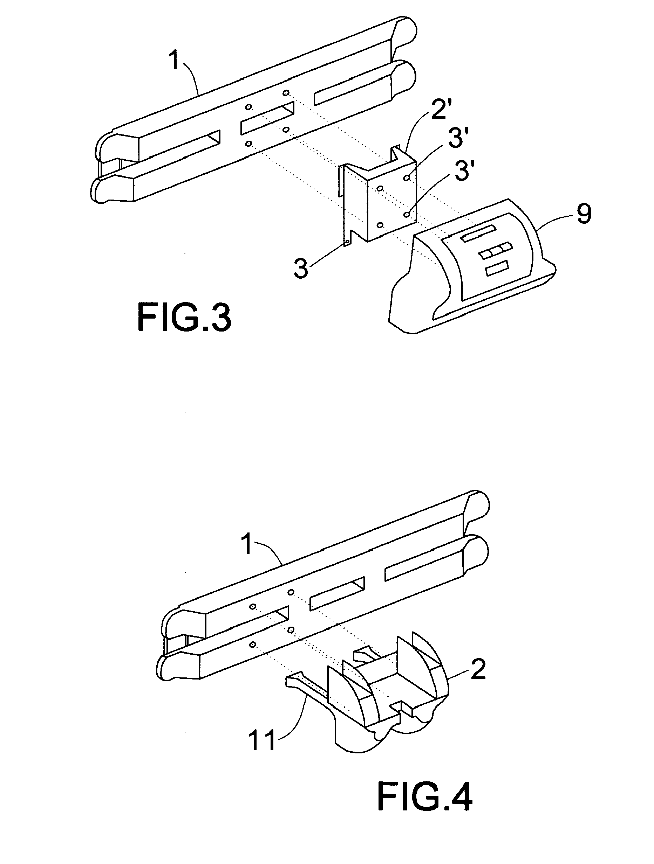

Figure 3 shows an exploded perspective of a third embodiment of the invention. Here, the structure (1) has an adaptor element (2') connected to it which acts as a zone for connecting the heating and air-conditioning (HVAC) distribution and regulation system by means of fixing means (3), and which enables the connection of the central console (9) by means of fixing means (3').

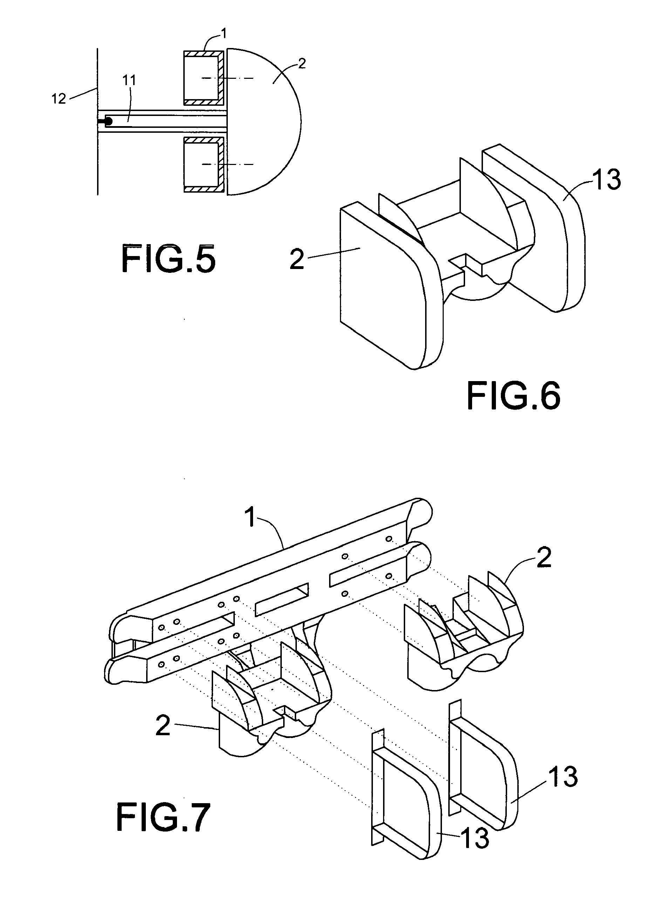

Figure 4 shows an exploded perspective of a fourth embodiment of the invention. Here, unlike the preceding cases, the adaptor element (2) is meant to be connected to the vehicle bodywork. For this purpose, the driver's adaptor element (2) comprises an extension (11) that is to be connected to the vehicle bodywork. Figure 5, which shows a left-side view of the cockpit carrier of Figure 4, illustrates how said extension (11) extends behind the structure (1), where it is connected to the vehicle bodywork (12). In this specific embodiment, the area of the bodywork (12) to which the adaptor element (2) is connected is the vehicle firewall. The connection of an adaptor element (2) to the bodywork may be useful and advantageous in certain circumstances in order to achieve the optimal transmission of forces between the cockpit carrier and the vehicle bodywork.

The invention contemplates that one or more of the functional elements, regardless of which ones they are, form an integral part of an adaptor element (2). As a result, it is possible that the adaptor element (2) comprises functional elements both effectively and at a low cost that is practically the same as the cost of the adaptor element (2) without said functional elements. For example, Figure 6 shows an embodiment of an adaptor element (2) corresponding to the driver and which comprises a knee restraint (13) formed as a projection of the adaptor element (2) itself.

The manufacture of an adaptor element (2) provided with built-in functional elements is preferably carried out by manufacturing the single part (adaptor element (2) plus functional elements) during a single moulding process. However, there are naturally other feasible embodiments, depending on the manufacturing procedures of the adaptor element (2).

Similarly, the structure (1) may comprise one or more built-in functional elements, the unit preferably manufactured during a single moulding process. For example, said built-in functional elements may be air ducts and/or knee restraints.

## Claims

1. Cockpit carrier for a vehicle, **characterised in that** it comprises a structure (1) capable of being connected to the A-pillars of the vehicle, and adaptor elements (2) formed as parts that are independent to the structure (2) and which are connected to it by fixing means, said adaptor elements (2) being used to connect the structure (1) to at least one functional element of the vehicle.

2. Cockpit carrier according to claim 1, wherein the adaptor elements (2) are used to connect the structure (1) to at least one of the following functional elements of the vehicle:
- a steering column,
- a steering column support,
- a firewall,
- an airbag,
- a glove compartment,
- air and air-conditioning distribution ducts,
- a heating and air-conditioning (HVAC) distribution and regulation system,
- cables,
- a dashboard,
- an instrument panel,
- knee restraints,
- a sound system, a navigation system and/or other electrical or electronic device,
- a bonnet release lever,
- pedals.

3. Cockpit carrier according to claim 1, wherein the structure (1) also comprises at least one functional element formed as an integral part of the structure (1).

4. Cockpit carrier according to claim 3, wherein the structure (1) and functional elements built into the structure (1) are manufactured jointly during a single moulding process.

5. Cockpit carrier according to claim 1, wherein the adaptor element (2) also comprises at least one functional element formed as an integral part of the adaptor element (2) itself.

6. Cockpit carrier according to claim 5, wherein the adaptor element (2) and the functional elements built into the adaptor element (2) are manufactured jointly during a single moulding process.

7. Cockpit carrier according to claim 1, wherein no adaptor element (2) is connected to the vehicle bodywork.

8. Cockpit carrier according to claim 1, wherein at least one adaptor element (2) is connected to the vehicle bodywork.

9. Cockpit carrier according to claim 1, wherein the structure (1) is common to all vehicles in a group of vehicles, whereas the adaptor elements (2) are specific to one or more vehicles in said group of vehicles.

10. Structure (1) for a cockpit carrier according to any of claims 1 to 8.

11. Adaptor element (2) for a cockpit carrier according to any of claims 1 to 8.

12. Method of manufacture for a motor vehicle cockpit carrier **characterised in that** it comprises the following steps:
- providing a structure (1) capable of being connected to the A-pillars of the vehicle,
- selecting adaptor elements (2) formed as parts independent to the structure (1) and which are capable of being connected to the structure (1) by fixing means, said adaptor elements (2) being used to connect at least one functional element of the vehicle to the structure (1), the adaptor elements (2) being selected from a group of adaptor elements (2) that may be connected to the structure (1),
- connecting the adaptor elements (2) to the structure (1).
